# EUROPÄISCHE PATENTANMELDUNG

(11) **EP 1 710 123 A1**
(43) Veröffentlichungstag der Anmeldung: **11.10.2006**
(21) Anmeldenummer: 05007643.9
(22) Anmeldetag: 07.04.2005
(51) Int. Cl.: B60Q 1/30, B60Q 11/00

(54) **Schaltungsanordnung zur Kontrolle der Funktion der Blinkleuchten eines Zugfahrzeuges mit Anhänger**

(71) Anmelder: Delphi Technologies, Inc., Troy, MI 48007 (US)
(72) Erfinder: Hombach, Frank, 51674 Wiehl (DE); Hupertz, Stefan, 57462 Olpe (DE); Eichstädt, Tino, 53797 Lohmar (DE)
(74) Vertreter: Manitz, Finsterwald & Partner GbR

(57) **Zusammenfassung**

Die Erfindung betrifft eine Schaltungsanordnung zur Kontrolle der Funktion der Blinkleuchten (13,15,17,19) eines Zugfahrzeugs und eines an das Zugfahrzeug angehängten Anhängers mit Auswahlmitteln (21,23,25,27,29,31) zum abwechselnden Verbinden wenigstens einer Blinkleuchte (17) des Zugfahrzeugs und wenigstens einer Blinkleuchte (19) des Anhängers mit einem Blinktaktgeber (33), der zur Überwachung der Stromaufnahme zumindest der jeweils verbundenen Blinkleuchte (17,19) ausgelegt ist.

## Beschreibung

Die Erfindung betrifft eine Schaltungsanordnung zur Kontrolle der Funktion der Blinkleuchten eines Zugfahrzeugs und eines an das Zugfahrzeug angehängten Anhängers.

Die Blinklichtsignalanlage eines Kraftfahrzeugs weist üblicherweise für jede Fahrzeugseite einen Blinktaktgeber auf, der mit den Blinkleuchten der jeweiligen Fahrzeugseite verbunden ist, wobei die Blinkleuchten parallel zueinander geschaltet sind. Der Blinktaktgeber, der die Blinkleuchten mit einer bestimmten Blinkfrequenz ansteuert, umfasst dabei eine Stromüberwachungseinrichtung, mit der der Strom, der insgesamt in die Parallelschaltung der Blinkleuchten fließt, gemessen wird. Bei einem Ausfall einer Blinkleuchte, d.h. wenn die entsprechende Glühbirne oder LED defekt ist, wird der Stromfluss durch den jeweiligen Stromzweig unterbrochen, so dass der insgesamt von der Parallelschaltung aufgenommene Strom abnimmt. Folglich fällt der durch die Stromüberwachungseinrichtung gemessene Gesamtstrom unter den bei intakten Blinkleuchten erwarteten Wert, insbesondere Schwellwert, so dass der Ausfall einer Blinkleuchte zuverlässig erkannt werden kann. Der Ausfall kann beispielsweise durch einen Bordcomputer oder andere Anzeigemittel des Zugfahrzeugs angezeigt werden.

Wird an das Kraftfahrzeug ein Anhänger angehängt, der wenigstens eine Blinkleuchte für jede Fahrtrichtung aufweist, muss die Blinklichtsignalanlage zur Kontrolle der Funktion sowohl der Blinkleuchten des Zugfahrzeugs als auch der zumindest einen Blinkleuchte des Anhängers ausgelegt sein. Bei bekannten Blinklichtsignalanlagen ist hierfür ein weiterer Blinktaktgeber vorgesehen, der im Wesentlichen analog zu dem für das Zugfahrzeug zuständigen Blinktaktgeber aufgebaut ist, bevorzugt synchron zu diesem betrieben wird und mit diesem über ein Datenbussystem zur Übermittlung der die Funktion der Blinkleuchte des Anhängers anzeigenden Kontrolldaten in Verbindung steht.

Nachteilig bei diesem Aufbau ist jedoch, dass insgesamt zwei "intelligente" Blinktaktgeber, jeweils mit einem eigenen Mikrocontroller, vorgesehen sind, die jeweils zur Überwachung der Stromaufnahme der jeweils verbundenen Blinkleuchte oder Blinkleuchten ausgelegt sind. Darüber hinaus muss für das Datenbussystem zwischen den beiden Blinktaktgebern zumindest eine eigene Leitung zur Verfügung gestellt werden.

Der Erfindung liegt die Aufgabe zugrunde, eine Schaltungsanordnung der eingangs genannten Art zu schaffen, die besonders einfach aufgebaut und kostengünstig herstellbar ist.

Die Lösung dieser Aufgabe erfolgt durch die Merkmale des Anspruchs 1 und insbesondere dadurch, dass Auswahlmittel zum abwechselnden Verbinden wenigstens einer Blinkleuchte des Zugfahrzeugs und wenigstens einer Blinkleuchte des Anhängers mit einem Blinktaktgeber, der zur Überwachung der Stromaufnahme zumindest der jeweils verbundenen Blinkleuchte ausgelegt ist, vorgesehen sind.

Die Erfindung zeichnet sich dadurch aus, dass mit einem Takt des Blinktaktgebers die wenigstens eine Blinkleuchte des Zugfahrzeugs und mit einem anderen Takt des Blinktaktgebers die wenigstens eine Blinkleuchte des Anhängers mit dem Blinktaktgeber verbunden ist. Insbesondere ist die jeweils andere Blinkleuchte nicht mit dem Blinktaktgeber verbunden. Hierdurch kann abwechselnd die Funktion der Blinkleuchte des Zugfahrzeugs und die Funktion der Blinkleuchte des Anhängers kontrolliert werden.

Unter abwechselndem Verbinden ist zu verstehen, dass die Blinkleuchte des Zugfahrzeugs und die Blinkleuchte des Anhängers alternierend angesteuert werden, wobei die Dauer der Ansteuerung der Blinkleuchte des Zugfahrzeugs oder der Blinkleuchte des Anhängers jeweils einen oder mehrere Takte oder Taktzyklen des Blinktaktgebers betragen kann.

Neben der Blinkleuchte des Zugfahrzeugs, beispielsweise der hinteren Blinkleuchte des Zugfahrzeugs, und der Blinkleuchte des Anhängers, die alternierend mit dem Blinktaktgeber verbunden sind, sind üblicherweise die weitere oder weitere Blinkleuchten des Zugfahrzeugs, beispielsweise die vordere und gegebenenfalls eine mittlere Blinkleuchte des Zugfahrzeugs, ständig mit dem Blinktaktgeber verbunden.

Ein wesentlicher Vorteil der Erfindung besteht darin, dass die Funktion der Blinkleuchten eines Zugfahrzeugs und eines an das Zugfahrzeug angehängten Anhängers durch einen einzigen Blinktaktgeber kontrolliert werden kann. Somit ist auch lediglich ein Mikrocontroller notwendig. Darüber hinaus muss keine eigene Leitung zum Austausch der Kontrolldaten zwischen einem für das Zugfahrzeug zuständigen Blinktaktgeber und einem für den Anhänger zuständigen Blinktaktgeber zur Verfügung gestellt werden. Die vorliegende Erfindung zeichnet sich deshalb insbesondere dadurch aus, dass ein besonders einfacher und kostengünstiger Aufbau erreicht werden kann.

Vorteilhafte Ausführungsformen der Erfindung sind in den Unteransprüchen, der Beschreibung und der Zeichnung angegeben.

Nach einer bevorzugten Ausführungsform der Erfindung sind die Blinkleuchte des Zugfahrzeugs und die Blinkleuchte des Anhängers mit einem ersten Schalter verbunden, der dazu ausgelegt ist, die Blinkleuchten abwechselnd mit dem Blinktaktgeber zu verbinden. Mittels des ersten Schalters kann der jeweilige Laststromkreis von Blinktaktgeber und jeweiliger Blinkleuchte geöffnet bzw. geschlossen werden.

Besonders vorteilhaft ist es, wenn die Blinkleuchte des Zugfahrzeugs und die Blinkleuchte des Anhängers mit einem zweiten Schalter verbunden sind, der dazu ausgelegt ist, die Blinkleuchten abwechselnd mit einem Hilfsblinktaktgeber zu verbinden. Hierdurch wird gewährleistet, dass die jeweils nicht mit dem Blinktaktgeber verbundene Blinkleuchte mit Strom versorgt wird und mit den mit dem Blinktaktgeber verbundenen Blinkleuchten mitblinken kann. Der Hilfsblinktaktgeber ist bevorzugt als einfacher Schalter ausgebildet. Insbesondere weist der Hilfsblinktaktgeber keinen eigenen Mikrocontroller und keine eigene Stromüberwachungseinrichtung auf.

Der Hilfsblinktaktgeber kann durch den Blinktaktgeber steuerbar und insbesondere mit dessen Frequenz betreibbar sein. Hierdurch wird erreicht, dass die jeweils nicht mit dem Blinktaktgeber verbundene Blinkleuchte synchron mit den anderen Blinkleuchten blinkt.

Insbesondere können zwei mit den Blinkleuchten verbundene Schalter, insbesondere der erste und der zweite Schalter, als Doppelrelais ausgebildet sein. Hierdurch können über einen getrennten Steuerstromkreis die Laststromkreise sowohl der Blinkleuchte des Zugfahrzeugs als auch der Blinkleuchte des Anhängers gleichzeitig umgeschaltet werden, insbesondere derart, dass der eine Laststromkreis geschlossen wird, wenn der andere Laststromkreis geöffnet wird. Die beiden Schalter arbeiten in funktioneller Hinsicht dann gewissermaßen gegenläufig. Ein Relais zeichnet sich durch hohe Zuverlässigkeit und eine hohe Lebensdauer aus. Grundsätzlich kann aber auch jeder der beiden Schalter als Relais ausgebildet sein.

Es ist weiterhin bevorzugt, dass ein weiterer, insbesondere zwischen einem leitenden und einem nicht leitenden Zustand schaltbarer Schalter, insbesondere ein Transistor, vorgesehen ist, der zum Schalten von mit den Blinkleuchten verbundenen Schaltern, insbesondere dem ersten und dem zweiten Schalter, ausgebildet ist. Insbesondere kann der weitere Schalter den bereits vorstehend erwähnten Steuerstromkreis öffnen oder schließen, um die beiden mit der Blinkleuchte des Zugfahrzeugs und der Blinkleuchte des Anhängers verbundenen, insbesondere als Doppelrelais ausgeführten Schalter entsprechend zu betätigen. Beispielsweise kann in dem leitenden Zustand des weiteren Schalters die Blinkleuchte des Zugfahrzeugs mit dem Blinktaktgeber und die Blinkleuchte des Anhängers mit dem Hilfsblinktaktgeber verbunden, und in dem nichtleitenden Zustand des weiteren Schalters die Blinkleuchte des Zugfahrzeugs mit dem Hilfsblinktaktgeber und die Blinkleuchte des Anhängers mit dem Blinktaktgeber verbunden sein, oder umgekehrt.

Nach einer weiteren bevorzugten Ausführungsform der Erfindung ist der weitere Schalter durch einen Frequenzteiler steuerbar, der die Frequenz des Blinktaktgebers in einem bestimmten Verhältnis, insbesondere 1:2, herunterteilt. Dabei muss das Tastverhältnis des weiteren Schalters nicht notwendigerweise 50 % betragen. Prinzipiell ist auch jedes andere Tastverhältnis möglich. Bei einer Frequenzteilung von 1:2 wird die Blinkleuchte des Zugfahrzeugs genau einen Taktzyklus des Blinktaktgebers lang mit dem Blinktaktgeber und danach die Blinkleuchte des Anhängers genau einen Taktzyklus des Blinktaktgebers lang mit dem Blinktaktgeber verbunden. Ein 1:2-Frequenzteiler ist besonders einfach aufgebaut und deshalb besonders kostengünstig.

Die Erfindung betrifft weiterhin eine Vorrichtung mit einem Blinktaktgeber und einer Schaltungsanordnung, wie sie vorstehend erläutert ist. Die vorstehend erläuterte Schaltungsanordnung kann als separates Modul vorliegen, das optional in ein Zugfahrzeug einbaubar oder nachrüstbar ist. Die vorstehend erläuterte Schaltungsanordnung kann aber auch gemeinsam mit einem Blinktaktgeber in einem einzigen Baustein enthalten sein.

Die Erfindung wird nachfolgend beispielhaft unter Bezugnahme auf die Figuren der Zeichnung erläutert. Diese zeigen:
- Fig. 1: ein Schaltbild einer erfindungsgemäßen Schaltungsanordnung mit einem Blinktaktgeber und mehreren Blinkleuchten, und
- Fig. 2: verschiedene mit der erfindungsgemäßen Schaltungsanordnung zusammenhängende Taktsignale.

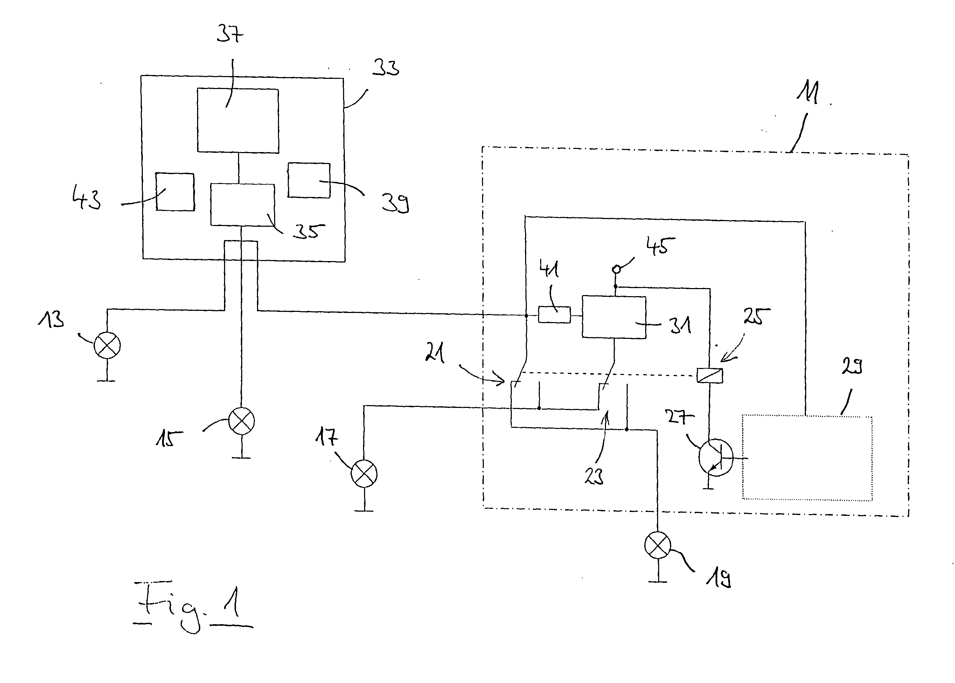

Fig. 1 zeigt eine Blinklichtsignalanlage zur Kontrolle der Funktion der Blinkleuchten 13, 15 und 17 eines Zugfahrzeugs und der Blinkleuchte 19 eines an das Zugfahrzeug angehängten Anhängers. Prinzipiell kann das Zugfahrzeug auch eine andere Anzahl an Blinkleuchten und der Anhänger mehr als lediglich eine Blinkleuchte aufweisen. Ein Blinktaktgeber 33 (Master-Modul) ist ständig mit der vorderen Blinkleuchte 13 und der mittleren Blinkleuchte 15 des Zugfahrzeugs verbunden. Darüber hinaus ist der Blinktaktgeber 33 abwechselnd mit der hinteren Blinkleuchte 17 des Zugfahrzeugs und der Blinkleuchte 19 des Anhängers, d.h. entweder mit der hinteren Blinkleuchte 17 des Zugfahrzeugs oder der Blinkleuchte 19 des Anhängers, verbunden.

Der Blinktaktgeber 33 ist dazu ausgelegt, gemäß einer vorgegebenen Blinkfrequenz die jeweils mit dem Blinktaktgeber 33 verbundenen Blinkleuchten 13, 15 und 17 oder 19 mit Spannungspulsen zu versorgen, so dass diese bei Betätigung des Blinkers durch den Fahrer entsprechend der vorgegebenen Blinkfrequenz blinken. Hierfür weist der Blinktaktgeber 33 einen Treiber 35, insbesondere einen High-Side-Driver (HSD) auf, der von einem Mikrocontroller 37 gesteuert wird. Ferner ist ein Zähler 43 vorgesehen, dessen Wert mit jedem ausgegebenen Spannungspuls um eins erhöht wird. Die Funktion des Zählers 43 wird an anderer Stelle noch näher erläutert.

Darüber hinaus umfasst der Blinktaktgeber 33 eine Stromüberwachungseinrichtung 39, die zur Überwachung der Stromaufnahme der jeweils mit dem Blinktaktgeber 33 verbundenen Blinkleuchten 13, 15 und 17 oder 19 ausgelegt ist. Die Stromüberwachungseinrichtung 39 misst hierzu die Gesamtstromaufnahme der jeweils mit dem Blinktaktgeber 33 verbundenen Blinkleuchten 13, 15 und 17 oder 19.

Fig. 1 zeigt weiterhin eine erfindungsgemäße Schaltungsanordnung 11 (Slave-Modul), mit Auswahlmitteln 21, 23, 25, 27, 29 und 31 zum abwechselnden Verbinden der hinteren Blinkleuchte 17 des Zugfahrzeugs und der Blinkleuchte 19 des Anhängers mit dem Blinktaktgeber 33. Hierfür umfasst die erfindungsgemäße Schaltungsanordnung 11 zunächst einen ersten Schalter 21, der sowohl mit der hinteren Blinkleuchte 17 des Zugfahrzeugs als auch der Blinkleuchte 19 des Anhängers verbunden und derart ansteuerbar ist, die Blinkleuchten 17 und 19 abwechselnd mit dem Blinktaktgeber 33 zu verbinden. Darüber hinaus ist ein zweiter Schalter 23 vorgesehen, der ebenfalls mit sowohl der hinteren Blinkleuchte 17 des Zugfahrzeugs als auch der Blinkleuchte 19 des Anhängers verbunden ist. Der zweite Schalter 23 ist derart ansteuerbar, die Blinkleuchten 17 und 19 abwechselnd mit einem Hilfsblinktaktgeber 31 zu verbinden.

Der Hilfsblinktaktgeber 31 ist als Treiber, insbesondere High-Side-Driver (HSD), im Wesentlichen analog zu dem Treiber 35 des Blinktaktgebers 33 ausgebildet. Der Hilfsblinktaktgeber 31 ist über einen Koppelwiderstand 41 durch den Blinktaktgeber 33 steuerbar und mit dessen Frequenz betreibbar, d.h. die Impulse des Hilfsblinktaktgebers 31 werden synchron mit den Impulsen des Blinktaktgebers 33 ausgegeben. Somit wird es der jeweils nicht mit dem Blinktaktgeber 33 verbundenen Blinkleuchte 19 oder 17 ermöglicht, mit den anderen Blinkleuchten 13, 15 und 17 oder 19 synchron mitzublinken.

Die beiden Schalter 21 und 23 sind als Doppelrelais 25 ausgebildet und werden mit einer Schaltfrequenz geschaltet, die der halben Taktfrequenz des Blinktaktgebers 33 bzw. des Hilfsblinktaktgebers 31, d.h. der halben Blinkfrequenz, entspricht. Dies führt dazu, dass während des einen Taktzyklus des Blinktaktgebers 33 die hintere Blinkleuchte 17 des Zugfahrzeugs mit dem Blinktaktgeber 33 und die Blinkleuchte 19 des Anhängers mit dem Hilfsblinktaktgeber 31 verbunden ist, während es sich bei dem darauf folgenden Taktzyklus genau umgekehrt verhält.

Das Betreiben des Doppelrelais 25 mit der halben Taktfrequenz des Blinktaktgebers 33 wird durch einen Frequenzteiler 29 ermöglicht, dessen Eingang mit dem Blinktaktgeber 33 verbunden ist und der die Frequenz des Blinktaktgebers 33 in einem Verhältnis 1:2 herunterteilt. Mit dieser heruntergeteilten Frequenz wird ein weiterer Schalter 27, insbesondere ein MOSFET, gesteuert, der zwischen einem leitenden und einem nicht leitenden Zustand schaltbar ist.

Der Hilfsblinktaktgeber 31 und der weitere Schalter 27 sind über eine Klemme 45 jeweils mit einer Spannungsversorgung verbunden. Der weitere Schalter 27 ist Bestandteil eines Steuerstromkreises für das Doppelrelais 25. Der Steuerstromkreis steuert die beiden Laststromkreise von Blinktaktgeber 31 und Blinkleuchte 17 des Zugfahrzeugs bzw. von Blinktaktgeber 31 und Blinkleuchte 19 des Anhängers.

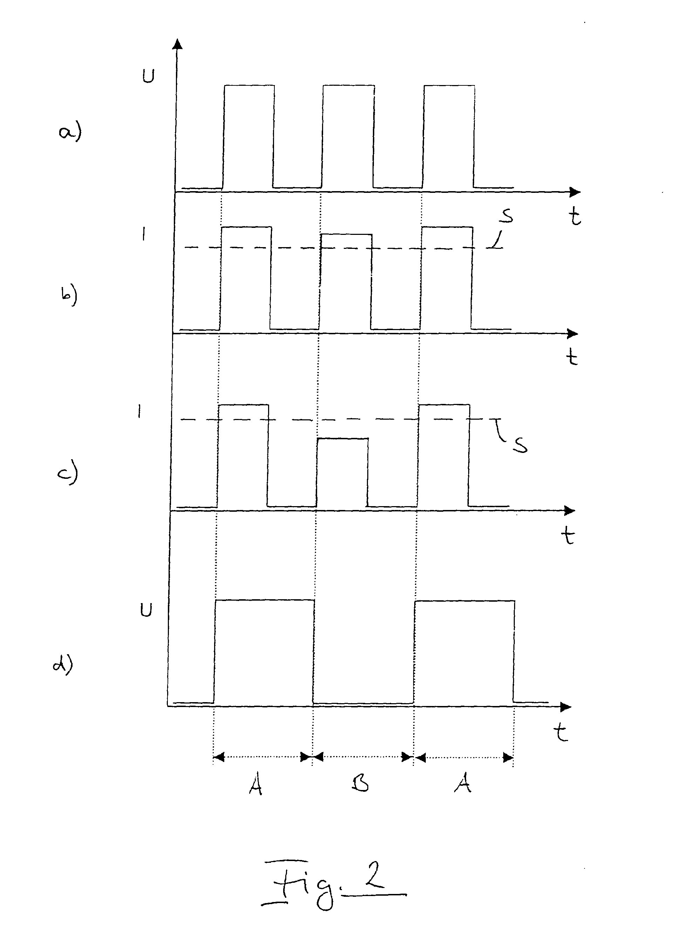

Nachfolgend wird die Funktionsweise der Blinklichtsignalanlage mit der erfindungsgemäßen Schaltungsanordnung unter zusätzlicher Bezugnahme auf Fig. 2 beschrieben.

Wenn der Fahrer eines Zugfahrzeugs mit einem Anhänger den Blinker für eine Fahrtrichtung betätigt, gibt der für die entsprechende Fahrtrichtung verantwortliche Blinktaktgeber 33 Spannungspulse mit einer vorgegebenen Blinkfrequenz an die jeweils mit dem Blinktaktgeber 33 verbundenen Blinkleuchten 13, 15 und 17 oder 19 aus, wobei in Fig. 2a beispielhaft drei aufeinanderfolgende Taktzyklen A, B und A des Blinktaktgebers 33 gezeigt sind.

Das Doppelrelais 25 hingegen wird - wie vorstehend beschrieben - lediglich mit der halben Taktfrequenz des Blinktaktgebers 33 geschaltet (Fig. 2d), so dass während der Taktzyklen A des Blinktaktgebers 33, d.h. während der ungeraden Taktzyklen, die hintere Blinkleuchte 17 des Zugfahrzeugs mit dem Blinktaktgeber 33 und die Blinkleuchte 19 des Anhängers mit dem Hilfsblinktaktgeber 31 verbunden ist. Während der Taktzyklen B des Blinktaktgebers 33, d.h. während der geraden Taktzyklen, ist dann die Blinkleuchte 19 des Anhängers mit dem Blinktaktgeber 33 und die hintere Blinkleuchte 17 des Zugfahrzeugs mit dem Hilfsblinktaktgeber 31 verbunden. Insgesamt wird jede der Blinkleuchten 17 und 19 abwechselnd, jeweils einen kompletten Taktzyklus A oder B des Blinktaktgebers 33 lang, mit dem Blinktaktgeber 33 und dem Hilfsblinktaktgeber 31 verbunden.

Beim Anlegen der Spannungspulse des Blinktaktgebers 33 an die mit dem Blinktaktgeber 33 verbundenen Blinkleuchten 13, 15 und 17 oder 19 wird mittels der Stromüberwachungseinrichtung 39 die Stromaufnahme der mit dem Blinktaktgeber 33 verbundenen Blinkleuchten 13, 15 und 17 oder 19 gemessen. Gemäß dem in Fig. 2b gezeigten Beispiel ist die Gesamtstromaufnahme für die Blinkleuchten 13, 15 und 19 (Taktzyklus B, zweiter Peak) geringfügig kleiner ist als die Gesamtstromaufnahmen für die Blinkleuchten 13, 15 und 17 (Taktzyklen A, erster und dritter Peak). Dies lässt darauf schließen, dass die Blinkleuchte 19 des Anhängers weniger Strom zieht als die hintere Blinkleuchte 17 des Zugfahrzeugs. Die Gesamtstromaufnahme in allen Taktzyklen A und B des Blinktaktgebers 33 liegt jedoch über einem Schwellwert S, so dass erkannt wird, dass keine der Blinkleuchten 13, 15, 17 und 19 defekt ist.

Ist jedoch beispielsweise die Blinkleuchte 19 des Anhängers defekt, so ist die Gesamtstromaufnahme herabgesetzt und liegt unter dem Schwellwert S, wie in Fig. 2c gezeigt. Das Unterschreiten des Schwellwerts S wird durch die Stromüberwachungseinrichtung 39 gemessen und durch den Mikrocomputer 37 detektiert. Mit Hilfe des Zählers 43 des Blinktaktgebers 33 kann festgestellt werden, ob in dem Takt, in dem der Schwellwert S unterschritten wurde, der Blinktaktgeber 33 mit der hinteren Blinkleuchte 17 des Zugfahrzeugs (Taktzyklus A) oder der Blinkleuchte 19 des Anhängers (Taktzyklus B) verbunden ist, d.h. ob es sich bei dem fraglichen Takt um einen ungeraden oder geraden Takt handelt, so dass eindeutig feststellbar ist, ob die Blinkleuchte 17 oder die Blinkleuchte 19 defekt ist.

Eine defekte Blinkleuchte 13, 15, 17 des Zugfahrzeugs kann beispielsweise durch einen Bordcomputer oder andere, insbesondere am Armaturenbrett angebrachte Anzeigemittel des Zugfahrzeugs angezeigt werden. Ein Defekt der Blinkleuchte 19 des Anhängers kann ebenfalls durch den Bordcomputer oder die anderen oder noch andere Anzeigemittel angezeigt werden, wobei der Fahrer unmittelbar erkennen kann, ob der Defekt am Zugfahrzeug oder am Anhänger vorliegt.

### Bezugszeichenliste

- 11: Schaltungsanordnung
- 13: Blinkleuchte
- 15: Blinkleuchte
- 17: Blinkleuchte
- 19: Blinkleuchte
- 21: erster Schalter
- 23: zweiter Schalter
- 25: Doppelrelais
- 27: weiterer Schalter
- 29: Frequenzteiler
- 31: Hilfsblinktaktgeber
- 33: Blinktaktgeber
- 35: Treiber
- 37: Mikrocontroller
- 39: Stromüberwachungseinrichtung
- 41: Koppelwiderstand
- 43: Zähler
- 45: Klemme

## Patentansprüche

1. Schaltungsanordnung zur Kontrolle der Funktion der Blinkleuchten (13, 15, 17, 19) eines Zugfahrzeugs und eines an das Zugfahrzeug angehängten Anhängers,
**gekennzeichnet durch**,
Auswahlmittel (21, 23, 25, 27, 29, 31) zum abwechselnden Verbinden wenigstens einer Blinkleuchte (17) des Zugfahrzeugs und wenigstens einer Blinkleuchte (19) des Anhängers mit einem Blinktaktgeber (33), der zur Überwachung der Stromaufnahme zumindest der jeweils verbundenen Blinkleuchte (17, 19) ausgelegt ist.

2. Schaltungsanordnung nach Anspruch 1,
**dadurch gekennzeichnet ,**
**dass** die Blinkleuchte (17) des Zugfahrzeugs und die Blinkleuchte (19) des Anhängers mit einem ersten Schalter (21) verbunden sind, der dazu ausgelegt ist, die Blinkleuchten (17, 19) abwechselnd mit dem Blinktaktgeber (33) zu verbinden.

3. Schaltungsanordnung nach Anspruch 1 oder 2,
**dadurch gekennzeichnet ,**
**dass** die Blinkleuchte (17) des Zugfahrzeugs und die Blinkleuchte (19) des Anhängers mit einem zweiten Schalter (23) verbunden sind, der dazu ausgelegt ist, die Blinkleuchten (17, 19) abwechselnd mit einem Hilfsblinktaktgeber (31) zu verbinden.

4. Schaltungsanordnung nach Anspruch 3,
**dadurch gekennzeichnet ,**
**dass** der Hilfsblinktaktgeber (31) durch den Blinktaktgeber (33) steuerbar und insbesondere mit dessen Frequenz betreibbar ist.

5. Schaltungsanordnung nach einem der vorhergehenden Ansprüche,
**dadurch gekennzeichnet ,**
**dass** zwei mit den Blinkleuchten (17, 19) verbundene Schalter (21, 23) als Doppelrelais (25) ausgebildet sind.

6. Schaltungsanordnung nach einem der vorhergehenden Ansprüche,
**dadurch gekennzeichnet ,**
**dass** ein weiterer, insbesondere zwischen einem leitenden und einem nichtleitenden Zustand schaltbarer Schalter (27), insbesondere ein Transistor, vorgesehen ist, der zum Schalten von mit den Blinkleuchten (17, 19) verbundenen Schaltern (21, 23) ausgebildet ist.

7. Schaltungsanordnung nach Anspruch 6,
**dadurch gekennzeichnet ,**
**dass** der weitere Schalter (27) durch einen Frequenzteiler (29) steuerbar ist, der die Frequenz des Blinktaktgebers (33) in einem bestimmten Verhältnis, insbesondere 1:2, herunterteilt.

8. Vorrichtung mit einem Blinktaktgeber (33) und einer Schaltungsanordnung (11) nach einem der vorhergehenden Ansprüche.
